# EUROPÄISCHE PATENTSCHRIFT

(11) **EP 0 644 920 B1**
(45) Veröffentlichungstag und Bekanntmachung des Hinweises auf die Patenterteilung: **10.11.1999**
(21) Anmeldenummer: 93912858.3
(22) Anmeldetag: 02.06.1993
(51) Int. Cl.: C09J 7/02, A61B 5/04

(54) **ELEKTRISCH LEITFÄHIGE TRANSPARENTE HAFTKLEBEFILME, VERFAHREN ZU IHRER HERSTELLUNG UND VERWENDUNG ZUR HERSTELLUNG BIOMEDIZINISCHER ELEKTRODEN**
ELECTROCONDUCTIVE TRANSPARENT PRESSURE-SENSITIVE ADHESIVE FOILS, PROCESS FOR PRODUCING THE SAME AND THEIR USE FOR PRODUCING BIOMEDICAL ELECTRODES
PELLICULES AUTO-ADHESIVES TRANSPARENTES ELECTRO-CONDUCTRICES, LEUR PROCEDE DE FABRICATION ET LEUR UTILISATION POUR FABRIQUER DES ELECTRODES BIOMEDICALES

(30) Priorität: 12.06.1992 DE 4219368
(43) Veröffentlichungstag der Anmeldung: 29.03.1995
(73) Patentinhaber: Lohmann GmbH & Co. KG, 56567 Neuwied (DE)
(72) Erfinder: CZECH, Zbigniew, D-5400 Koblenz 1 (DE); SANDER, Heinz, Dieter, D-5450 Neuwied 23 (DE)
(74) Vertreter: Flaccus, Rolf-Dieter, Dr.
(86) Internationale Anmeldenummer: EP9301386
(87) Internationale Veröffentlichungsnummer: WO9325627

(56) Entgegenhaltungen:
- WO-A-92/10553
- DE-A- 3 304 695

## Beschreibung

Die Erfindung betrifft elektrisch leitfähige transparente Haftklebefilme mit einem elektrischen Leitwert oberhalb von 10⁻⁵ S, die sich zur Herstellung biomedizinischer Elektroden eignen.

Die gängige Standardausführung solcher biomedizinischer Elektroden enthält in einem aus SchaumstoffmitteIn ausgestanzten Loch ein elektrisch leitfähiges Gel, dessen Lagerfähigkeit wegen mit der Lagerungsdauer zunehmenden Austrocknung begrenzt ist. Ein weiterer Nachteil dieser Austrocknung ist, daß die Haut nach Gebrauch der Elektrode von Gelrückständen gereinigt werden muß bzw., daß es bei nicht sorgfältig vorgenommener Entfernung der Gelrückständen zu Verschmutzungen der Kleidung des Patienten kommen kann.
Es wurden daher Bemühungen unternommen, diese Nachteile durch Bereitstellen einer elektrisch leitfähig eingestellten lagerbeständigen Haftklebebeschichtung zu beseitigen, bzw. wesentlich zu mindern.
Übliche Methoden zur Erzielung einer elektrischen Leitfähigkeit, beispielsweise Einbau von Graphitpulver, sind nicht anwendbar, da der Haftklebefilm transparent bleiben muß.

Nach DE-OS 1594137 sind haftklebende leitfähige Streifen bekannt, die filmbildende ionisierte organische Polymersalze enthalten. Die Polymere selbst sind nur wenig in Wasser löslich, werden aber durch die eingebauten, zur Salzbildung befähigten funktionellen Gruppen hydrophil und ionogen gemacht. Als geeignete Beispiele sind die Natriumsalze von sulfoniertem Styrol und Polybenzylsulfonat zu nennen. Eine weitere bevorzugte Gruppe sind die Salze von quaternären Polymerisaten aus Dimethylaminoethyl methacrylat oder dessen Mischpolymerisate mit Butylacrylat und 4-Vinylpyridin, das mit Methylbromid oder Allylchlorid zu 95 bis 100 % quaterniert worden ist.

Nach der EP-A 0263586 werden zur Herstellung von elektrisch leitfähigen Haftklebefilmen leitfähige Haftklebemassen aus einem Wasserstoffdonator-Monomer (z.B. Acrylsäure) und einem Wasserstoffakzeptor-Monomer (z.B N-Vinylpyrrolidon) verwendet.

Als Polymerisationsmedium dient ein Gemisch aus Wasser und Glycerin. Dem Copolymerisat wird noch ein wasserlösliches Salz und als Vernetzer bifunktionelles (Meth-)acrylat zugesetzt.

In der EP-A 0322093 ist eine Herstellung von elektrisch leitfähigen Haftklebefilmen beschrieben, bei der eine hydrophile Haftklebemasse auf Basis von N-Vinyllactam in Mischung mit einem Weichmacher und vernetzt mit mehrfunktionellen ethylenisch ungesättigten Derivaten verwendet wird.

Bei der Verwendng zur Herstellung von biomedizinischen Elektroden weisen diese bekannten Haftklebefilme jedoch diverse Mängel auf, die ihre praktische Anwendung einschränken.
lhr Kohäsionsvermögen ist infolge ihrer Empfindlichkeit gegenüber Haufteuchtigkeit gemindert.
Nach mehrstündigem Kontakt mit der Haut verbleiben beim Abziehen Klebstoffreste auf der Haut, wodurch die Wiederverwendung von derartigen mit diesen elektrisch leitfähigen Haftklebefilmen ausgerüsteten biomedizinischen Elektroden unmöglich ist.

Der vorliegenden Erfindung liegt daher die Aufgabe zugrunde, elektrisch leitfähige Haftklebefilme herzustellen, die exzellente Feuchteresistenz und stabile innere Festigkeit aufweisen und sich zur Herstellung von wiederverwendbaren biomedizinischen Elektroden bestens eignen.

Das der Erfindung zugrunde liegende Problem wird überraschend gelöst durch elektrisch leitfähige transparente Haftklebefilme mit einem elektrischen Leitwert oberhalb von 10⁻⁵ S, welche bestehen aus 100 Gewichtsteilen eines carboxylgruppenhaltigen Copolymerisats auf Acrylatbasis, 50 bis 150 Gewichtsteilen eines wasserlöslichen Amins, 50 bis 250 Gewichtsteilen eines Polyoxyalkylens mit einer Molekularmasse unter 1000 und/oder eines Polyols und/oder dessen Derivaten, 50 bis 200 Gewichtsteilen einer Elektrolytlösung und 0,1 bis 6 Gewichtsteilen eines Vernetzungsmittels, wobei die Elektrolytlösung erfindungsgemäß eine physiologisch unbedenkliche wäßrige Lösung eines Alkalimetallsulfits, vorzugsweise Natrium- oder Kaliumsulfit, in einer Konzentration von vorzugsweise 5 bis 40 Gew.% ist.

Die bevorzugten-carboxylgruppenhaltigen Copolymerisate auf Acrylatbasis werden vorzugsweise durch eine radikalische Lösemittelpolymerisation von
a) 40 bis 80 Gew.-% Alkyl(meth)acrylaten mit 4 bis 12 C-Atomen im Alkylrest,
b) 10 bis 30 Gew.-% hydroxylgruppenhaltigen (Meth)acrylaten
c) 5 bis 30 Gew.-% einfach ungesättigten Carbonsäuren
d) 0.5 bis 20 Gew.-% von Salzen von ungesättigten organischen Sulfonsäuren,
e) 0,1 bis 5 Gew.-% von Salzen von carboxylgruppenhaltigen N-substituierten (Meth)acrylamidderivaten
synthetisiert.

Als Alkyl(meth)acrylate mit 4 bis 12 C-Atomen im Alkylrest sind Butyl-, Pentyl-, Hexyl-, Heptyl-, Octyl-, 2-Ethylhexyl-, Isooctyl-, 2-Methylheptyl-, Nonyl-, Isononyl-, Decyl oder Dodecyl(meth)acrylat bevorzugt.

Als hydroxylgruppenhaltige (Meth)acrylate werden die Hydroxyalkyl(meth)acrylate bevorzugt, insbesondere 2-Hydroxyethyl(meth)acrylat, 2-Hydroxypropyl(meth)acrylat oder 4-Hydroxybutyl(meth)acrylat, die allein oder im Gemisch untereinander eingesetzt werden können.

Bevorzugte Vinylcarbonsäuren, die im fertigen Polymerisat aktive Vernetzungszentren bilden, sind (Meth)acrylsäure, β-Acryloyloxypropionsäure, Vinylessigsäure, Aconitsäure. Trichloracrylsäure, Dimethylacrylsäure, Crotonsäure, Fumarsäure oder Itaconsäure, insbesondere bevorzugt sind (Meth)acrylsäure und β-Acryloyloxypropionsäure.

Die Salze der ungesättigten organischen Sulfonsäuren, die zur Herstellung des carboxylgruppenhaltigen Copolymerisots auf Acrylatbasis eingesetzt werden, sind bevorzugt Metallsalze, insbesondere Alkalimetall- und/oder Ammoniumsalze, wobei die Salze der Vinylsulfonsäure, 2-Methylprop-1-en-3-sulfonsäure, Vinylbenzylsulfonsäure und der 2-Acrylamido-2-methylpropansulfonsäure bevorzugt sind. Als Metallsalze sind insbesondere die Lithium-, Natrium- und/oder Kaliumsalze geeignet.

Als bekannte carboxylgruppenhaltige N-substituierte (Meth)acrylamidderivate kommen bevorzugt N-substituierte (Meth)acrylamidderivate der allgemeinen Formel 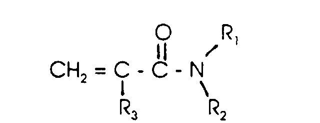 zum Einsatz, in der R₁ ein Wasserstoffatom, eine Alkyl-, Aryl-, Arylalkyl-, Alkylaryl-, Alkoxyalkyl-, Alkoxyaryl-, Acetylalkyl- oder Acetylalkoxyalkylgruppe, R₂ eine Carboxyalkyl- oder Carboxylarylgruppe, R₃ ein Wasserstoffatom oder eine Methylgruppe sein können. Als Salze dieser Verbindungen kommen vor allem die Alkali- oder Ammoniumsolze in Frage.

Das carboxylgruppenhaltige Copolymerisat wird zusammen mit einen wasserlöslichen Amin eingesetzt. Besonders bevorzugt sind wasserlösliche Polyoxyalkylenamine der allgemeinen Formel. 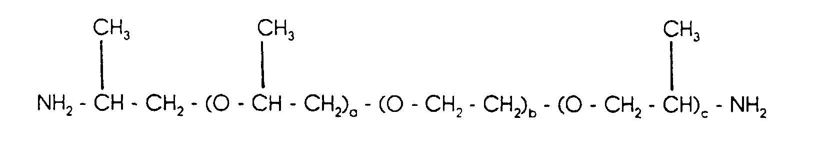 in der a + c größer als 2, b größer als 6 und kleiner als 60 ist.

Als Polyoxyalkylene mit einer Molekularmasse unter 1000 werden Polyethylenglykole, Polypropylenglykole, Polyoxypropylen/Polyoxyethylen-Copolymere, Monoethylenglykoldimethylether oder Polyethylenglykoldimethylether eingesetzt.

Als Polyole werden bevorzugt Glycerin oder dessen Derivate wie Diacetin, Glycerinaldehyd, Glycerinsäure, Glycerinsäuremethylester, α-Monoacetin oder α-Monobutirin.

Um eine erforderliche elektrische Leitfähigkeit der Haftklebemasse auf Acrylatbasis zu erreichen, wird dem Copolymerisat eine wäßrige Alkalimetallsulfitlösung, vorzugsweise Natrium- oder Kaliumsulfit in einer Konzentration von 5 bis 40 Gew.-%. als Elektrolytlösung zugegeben.

Als geeignete Vernetzer, die mit den Carboxylgruppen eine intermolekulare Struktur ausbilden können, werden Metallchelate, Metallsäureester, Epoxid-, Aziridin- oder Melaminformaldehydharze empfohlen. Besonders geeignet sind bei Raumtemperatur reagierende Vernetzer wie beispielsweise Metallchelate.

Das carboxylgruppenhaltige Copolymerisot auf Acrylatbasis wird durch radikalische Polymerisation in Lösemittel in an sich bekannter Weise aus den benötigten Komponenten synthetisiert. Das erhaltene Polymerisat wird mit Isopropylalkohol stabilisiert und mit einem wasserlöslichen Amin, Polyoxyalkylen oder Polyol, wässriger Elektrolytlösung und einem Vernetzungsmittel gemischt. Die so erhaltene homogene Haftklebemasse wird auf eine siliconisierte Folie aufgetragen, im Trockenkanal bei 65°C getrocknet und dann durch Kaschieren auf eine entsprechende Unterlage zu einem elektrisch leitfähigen Haftklebeartikel verarbeitet.

Die Erfindung wird anhand der folgenden Beispiele näher erläutert.

Die in den nachfolgenden Tabellen verwendeten Abkürzungen haben folgende Bedeutung:

### Abkürzungsverzeichnis

- 2-EHA -: 2-Ethylhexylacrylat
- IO -: Isooctylacrylat
- BA -: Butylacrylat
- HEA -: 2-Hydroxyethylacrylat
- HPA -: 2-Hydroxypropylacrylat
- HBA -: 4-Hydroxybutylacrylat
- AS -: Acrylsäure
- APS -: β-Acryloyloxypropionsäure
- VS-Na -: Natriumvinylsulfonat
- MAS-Na -: Natriummethallylsulfonat
- AMBS-NA -: Natriumsalz der 3-Acrylamido-3-methylbuttersäure
- AUS-Na -: Natriumsalz de 10-Acrylamido-undecansäure
- ED 600 -: Polyoxyalkylenamin mit einer Molekarmasse von 600
- ED 900 -: Polyoxyalkylenamin mit einer Molekularmasse von 900
- PEG 200 -: Polyethylenglykol mit einer Molekularmasse von 200
- PPG 405 -: Polypropylenglykol mit einer Molekularmasse von 405
- AIACA -: Aluminiumacetylacetonat
- ZrACA -: Zirkonacetylacetonat

Die aus den in Tabelle 1 aufgeführten Monomeren durch Lösungspolymerisation gebildeten Polymerisate weisen einen Feststoffgehalt von ca. 50 Gew.-% auf.

Nach Verdünnen der hergestellten Polymerisate mit Isopropylalkohol auf einen Feststoffgehalt von 33 Gew.-% wird die Polymerisatlösung mit den aus der Tabelle 2 ersichtlichen Komponenten wie wasserlösliches Amin, Polyoxyalkylen oder Polyol, Elektrolytlösung und Vernetzungsmittel gemischt. Die auf diese Weise erhaltenen Haftklebemassen wurden auf eine siliconisierte Polyesterfolie aufgetragen, 10 Minuten bei 65° C im Trockenkanal getrocknet und anschließend mit einer aluminisierten Polyesterfolie abgedeckt. Der Masseauftrag lag bei ca. 140 g/m²

Das fertige Produkt wurde 1 Woche bei Raumtemperatur konditioniert.
Der elektrische Leitwert der transparenten Haftklebefilme wurde unter Verwendung eines Hochohm-Meßgeräts gemäß DIN 53 482 gemessen.

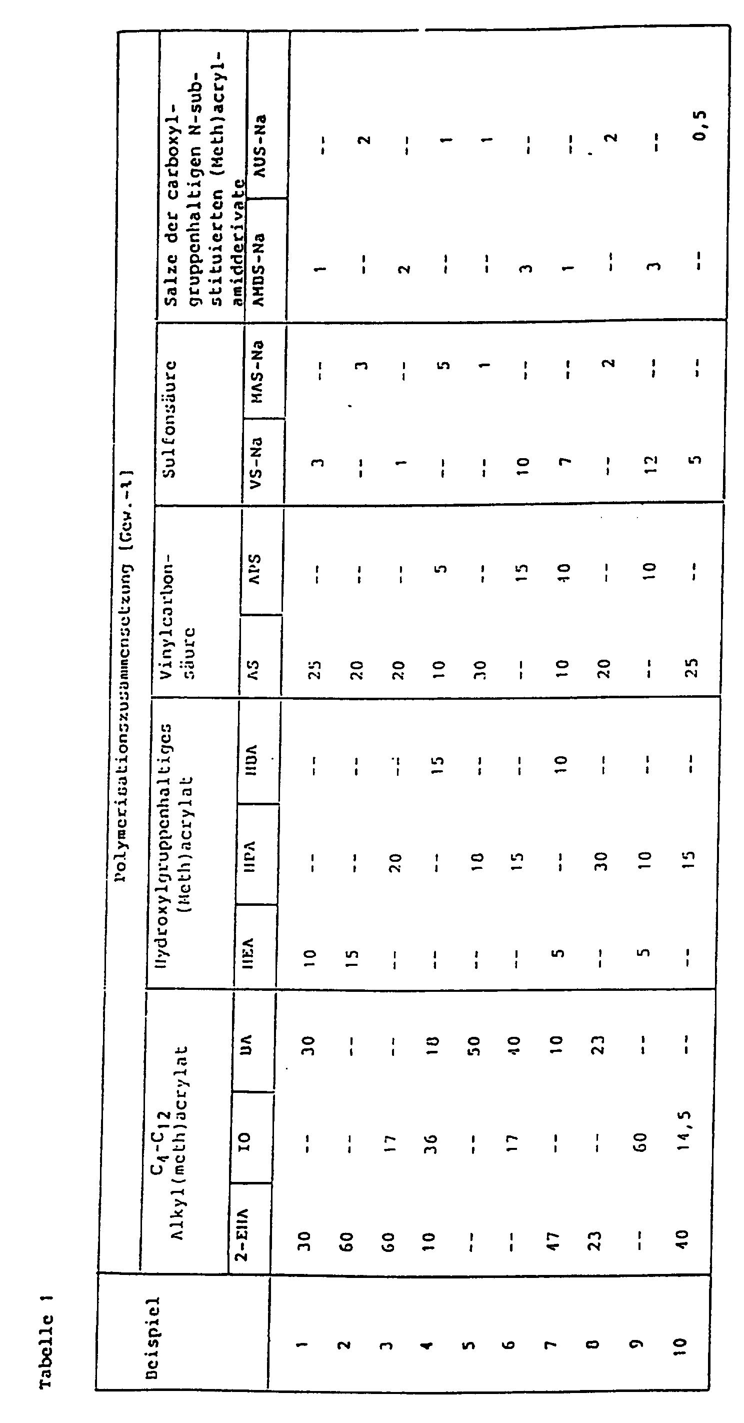

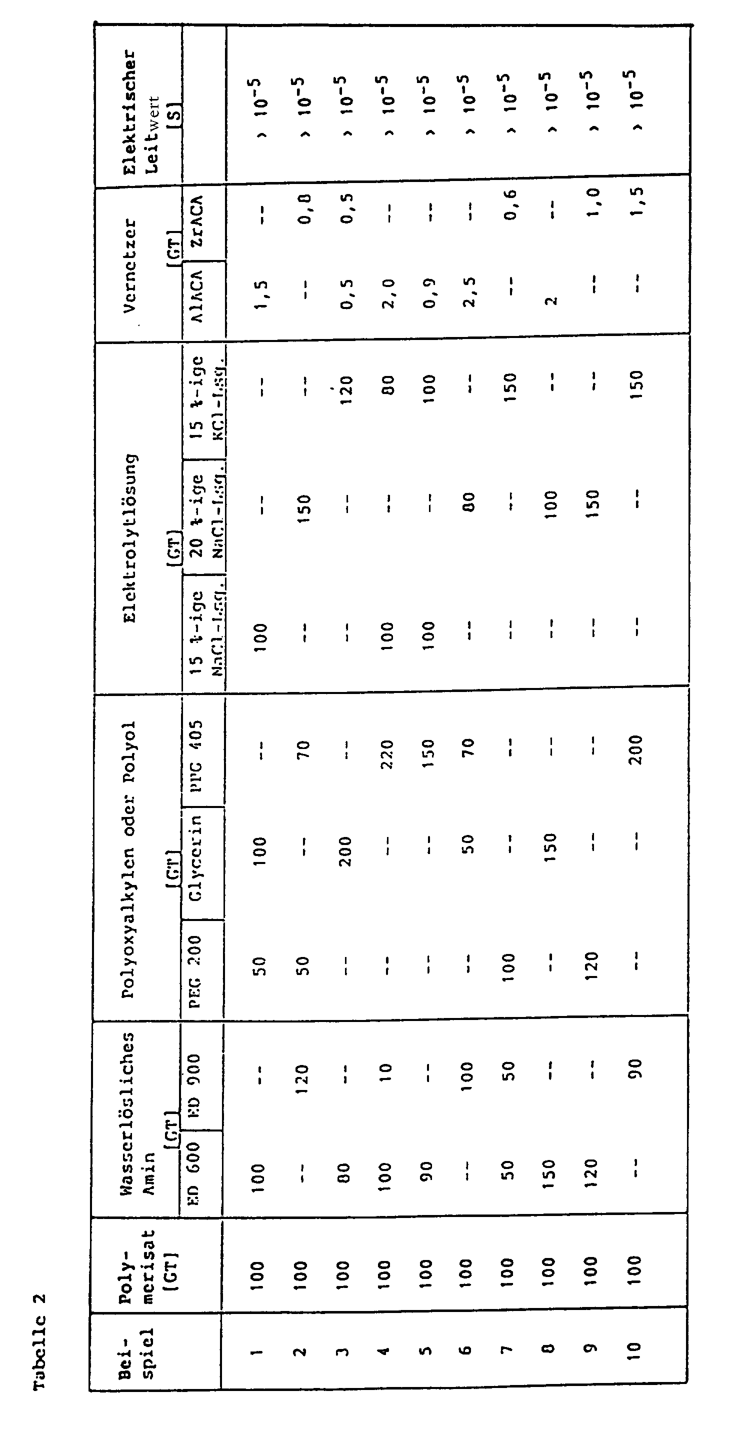

Aus Tabelle 2 ist zu ersehen, daß die ermittelte Leiffähigkeit durchweg oberhalb von 10⁻⁵ S lag, wodurch sich die Haftklebefilme in besonderer Weise zur Herstellung von biomedizinischen Elektroden eignen.
Beim Abziehen derartiger Haftklebefilme von der Haut verbleiben keine Kleberückstände auf der Haut, so daß eine Wiederverwendung der mit diesen elektrisch leitfähigen Haftklebefilmen ausgerüsteten biomedizinischen Elektroden ermöglicht wird.

### Beispiel 11:

Zu einer Haftklebemasse aus 30 Gew.-% 2-Ethylhexylacrylat, 30 Gew.-% Butylacrylat, 10 Gew.-% 2-Hydroxyethylacrylat, 25 Gew.-% Acrylsäure, 3 Gew.-% Natriumvinylsulfonat und 1 Gew.-% Natriumsalz der Acrylamido-3-methylbuttersäure formuliert in Ethylacetat (Feststoffgehalt 50 Gew.-%) werden nach der Verdünnung mit Isopropylalkohol (auf einen Feststoffgehalt von 30 Gew.-%) 100 Gewichtsteile Polyoxyalkylenamin mit einer Molekularmasse von 900, 50 Gewichtsteile Glycerin, 70 Gewichtsteile Polypropylenglykol 405, 80 Gewichtsteile 20%iger wäßriger K₂SO₃-Lösung und 2,5 Gewichtsteile 5%iger Lösung von Aluminiumacetylacetonat in Aceton zugegeben. Die Angaben in Gewichtsteilen beziehen sich auf den Feststoffgehalt des Polymerisates. Die erhaltene Haftklebemasse wurde auf eine siliconisierte Polyesterfolie aufgetragen, 10 Minuten bei 75 °C im Trockenkanal getrocknet und anschließend mit einer aluminisierten Polyesterfolie abgedeckt. Der Masseauftrag lag bei ca. 130 g/m².

Das fertige Produkt wurde 1 Woche bei Raumtemperatur konditioniert.
Der elekrische Leitwert des transparenten Haftklebefilmes wurde unter Verwendung eines Hochohm-Meßgeräts gemäß DIN 53 482 ermittelt. Der gemessene Wert lag oberhalb 10⁻⁴ S.

### Beispiel 12:

Die aus 40 Gew.-% 2-Ethylhexylacrylat, 14,5 Gew.-% Isooctylacrylat, 15 Gew.-% Hydroxypropylacrylat, 25 Gew.-% Acrylsäure, 5 Gew.-% Natriumvinylsulfat und 0,5 Gew.-% Natriumsalz der 10-Acrylamido-undecansäure in Ethylacetat synthetisierte Polyacrylathaftklebemasse wird nach der Polymerisation mit Isopropylalkohol von 50 Gew.-% auf 30 Gew.-% des Feststoffgehalts verdünnt. Nach der Mischung mit 80 Gewichtsteile Polyoxyalkylenamin mit einer Molekularmasse von 600, 200 Gewichtsteile Glycerin, 120 Gewichtsteile 30%iger wäßriger K₂SO₃-Lösung und 1 Gewichtsteile 5%iger Lösung von Aluminiumacetylacetonat in Aceton wird die auf diese Weise erhaltene Haftklebemasse auf eine siliconisierte Polyesterfolie aufgetragen, 10 Minuten bei 85 °C im Trockenkanal getrocknet und anschließend mit einer aluminisierten Polyesterfolie abgedeckt. Der Masseauftrag lag bei 120 g/m².

Das fertige Produkt wurde 1 Woche bei Raumtemperatur konditioniert.
Die mit einem Hochohm-Meßgerät gemäß DIN 53 482 ermittelte elektrische Leitwert des transparenten Haftklebefilms lag oberhalb 10⁻⁴ S.

### Beispiel 13

Zur Herstellung einer elektrisch leitfähigen Elektrode wurde der mit der nach dem Beispiel 11 synthetisierten Haftklebemasse hergestellte elektrisch leitfähige Haftklebefilm auf einen Polyethylenschaum übertragen. Zwischen den Polyethylenschaum und den zukaschierten elektrisch leitfähigen Haftklebefilm befand sich eine Reihe paralleler Elektrodenstreifen mit kurzem ca. 40 cm langen Anschlußkabel. Die Kontaktfläche betrug 40 x 40 mm.

## Patentansprüche

1. Elektrisch leitfähiger transparenter Haftklebefilm mit einem elektrischen Leitwert oberhalb von 10⁻⁵ S, bestehend aus
- 100 Gewichtsteilen eines carboxylgruppenhaltigen Copolymerisats auf Acrylatbasis,
- 50 bis 150 Gewichtsteilen eines wasserlöslichen Amins,
- 50 bis 250 Gewichtsteilen eines Polyoxyalkylens mit einer Molekularmasse unter 1000
und /oder eines Polyols
und/oder dessen Derivate,
- 50 bis 200 Gewichtsteilen einer Elektrolytlösung und
- 0,1 bis 6 Gewichtsteilen eines Vernetzungsmittels
dadurch gekennzeichnet, daß die Elektrolytlösung eine physiologisch unbedenkliche wässrige Lösung eines Alkalimetallsulfits, vorzugweise Natrium- oder Kaliumsulfit, in einer Konzentration von vorzugsweise 5 bis 40 Gew.-% ist.

2. Haftklebefilm nach Anspruch 1, dadurch gekennzeichnet, daß das carboxylgruppenhaltige Copolymerisat besteht aus
a) 40 bis 80 Gew.-% Alkyl(meth)acrylate mit 4 bis 12 C-Atomen im Alkylrest,
b) 10 bis 30 Gew.-% hydroxylgruppenhaltiger (Meth)Acrylate,
c) 5 bis 30 Gew.-% einfach ungesättigter Carbonsäuren,
d) 0,5 bis 20 Gew.-% an Salzen von ungesättigten organischen Sulfonsäuren,
e) 0,1 bis 5 Gew.-% an Salzen von carboxylgruppenhaltigen N-substituierten (Meth)acrylamidderivaten .

3. Haftklebefilm nach Anspruch 1 oder 2, dadurch gekennzeichnet, daß das Alkyl(meth)acrylat mit 4 bis 12 C-Atomen im Alkylrest ein Butyl-, Pentyl-, Hexyl-, Heptyl-, Octyl-, 2-Ethylhexyl-, Isooctyl-, 2-Methylheptyl-, Nonyl-, Decyl- oder Dodecyl(meth)acrylat ist.

4. Haftklebefilm nach einem oder mehreren der Ansprüche 1 bis 3, dadurch gekennzeichnet, daß das hydroxylgruppenhaltige (Meth)acrylat ein 2-Hydroxyethyl(meth)acrylat, 2-Hydroxypropyl(meth)acrylat oder 4-Hydroxybutyl(meth)acrylat ist.

5. Haftklebefilm nach einen oder mehreren der Ansprüche 1 bis 4, dadurch gekennzeichnet, daß die einfach ungesättigte Carbonsäure aus (Meth)acrylsäure, β-Acryloyloxypropionsäure, Vinylessigsäure, Fumarsäure, Crotonsäure, Aconitsäure, Dimethylacrylsäure oder ltaconsäure ausgewählt ist.

6. Haftklebefilm nach einem oder mehreren der Ansprüche 1 bis 5, dadurch gekennzeichnet, daß die Salze der ungesättigten organischen Sulfonsäure Alkalioder Ammoniumsalze sind.

7. Haftklebefilm nach einem oder mehreren der Ansprüche 1 bis 6, dadurch gekennzeichnet, daß die ungesättigte organische Sulfonsäure eine Vinylsulfonsäure, 2-Methylprop-1-en-3-sulfonsäure, Vinylbenzylsulfonsäure oder eine 2-Acrylamido-2-methylpropansulfonsäure ist.

8. Haftklebefilm nach einen oder mehreren der Ansprüche 1 bis 7, dadurch gekennzeichnet, daß die Salze des carboxylgruppenhaltigen N-substituierten (Meth)acrylamidderivates Alkali- oder Ammoniumsalze sind.

9. Haftklebefilm nach einem oder mehreren der Ansprüche 1 bis 8, dadurch gekennzeichnet, daß das carboxylgruppenhaltige N-substituierte (Meth)acrylamidderivat die allgemeine Formel 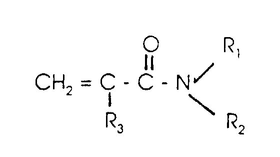 besitzt,
in der R₁ein Wasserstoffatom, eine Alkyl-, Aryl-, Arylalkyl-, Alkylaryl-, Alkoxyalkyl-, Alkoxyaryl-, Acetylalkyl oder Acetylalkoxyalkylgruppe, R₂ eine Carboxylalkyl- oder Carboxylarylgruppe, R₃ ein Wasserstoffatom oder eine Methylgruppe sein können.

10. Haftklebefilm nach einem oder mehreren der Ansprüche 1 bis 9, dadurch gekennzeichnet, daß das wasserlösliche Amin ein Polyoxylalkylenamin, vorzugsweise der allgemeinen Formel 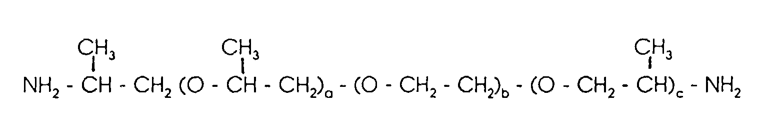 ist, in der a + c größer als 2, b größer als 6 und kleiner als 60 ist.

11. Haftklebefilm nach einen oder mehreren der Ansprüche 1 bis 10, dadurch gekennzeichnet, daß das Polyoxyalkylen mit einer Molekularmasse unter 1000 aus Polyethylenglykol, Polypropylenglykol Polyoxypropylen/Polyoxyethylen-Copolymer, Monoethylenglykoldimethylether oder Polyethylenglykoldimethylether ausgewählt ist und das Polyol ein Glycerin oder dessen Derivate wie Diacetin, Glycerinaldehyd, Glycerinsäure, Glycerinsäuremethylester, α-Monoacetin oder α-Monobutirin ist.

12. Haftklebefilm nach einem oder mehreren der Ansprüche 1 bis 11, dadurch gekennzeichnet, daß der Vernetzer ein Metallchelat, ein Metallsäureester, ein Epoxid, ein Aziridin, ein Triazidin oder ein Melaminformaldehydharz ist.

13. Verfahren zur Herstellung eines Haftklebefilms gemäß einem oder mehreren der Ansprüche 1 bis 12, dadurch gekennzeichnet, daß
- 100 Gewichtsteile eines carboxylgruppenhaltigen Copolymerisat auf Acrylatbasis, welches auf an sich durch Polymerisation in Lösung erhalten und mit Isopropylalkohol stabilisiert wurde,
- 50 bis 150 Gewichtsteile eines wasserlöslichen Amins
- 50 bis 250 Gewichtsteile eines Polyoxyalkylens mit einer Molekularmasse unter 1000 und /oder eines Polyols
und /oder dessen Derivate,
- 50 bis 200 Gewichtsteile einer Elektrolytlösung, die eine physiologisch unbedenkliche wässrige Lösung eines Alkalimetallsulfits, vorzugsweise Natrium- oder Kaliumsulfit, in einer Konzentration von vorzugsweise 5 bis 40 Gew.% ist, und
- 0,1 bis 6 Gewichtsteile eines Vernetzungsmittels
gemischt und homogenisiert werden, daß die so erhaltene homogene Haftklebemasse auf eine gegebenenfalls oberflächenbehandelte Folie aufgetragen, getrocknet und auf die gewünschte Größe geschnitten wird.

14. Verwendung der elektrisch leitfähigen transparenten Haftklebefilme gemäß einem oder mehreren der Ansprüche 1 bis 13 zur Herstellung von biomedizinischen Elektroden.

## Claims

1. Electrically conductive, transparent, pressure-sensitive adhesive film with an electric conductance above 10⁻⁵ S, consisting of
- 100 parts by weight of a carboxyl group-containing copolymer on an acrylate basis;
- 50 to 150 parts by weight of a water-soluble amine;
- 50 to 250 parts by weight of a polyoxyalkylene with a molecular mass of below 1000
and/or a polyalcohol
and/or its derivatives;
- 50 to 200 parts by weight of a solution of electrolytes; and
- 0.1 to 6 parts by weight of a cross-linking agent
characterized in that said solution of electrolytes is a physiologically acceptable aqueous solution of an alkalimetal sulfite, preferably sodium or potassium sulfite, in a concentration of preferably 5 to 40%-wt.

2. Pressure sensitive adhesive film according to Claim 1, characterized in that the carboxyl group-containing copolymer consists of
a) 40 to 80 weight per cent of alkyl(meth)acrylates with 4 to 12 C-atoms in the alkyl radical,
b) 10 to 30 weight per cent of hydroxyl group-containing (meth)acrylates,
c) 5 to 30 weight per cent of monoethenoid carboxylic acids,
d) 0.5 to 20 weight per cent of salts of unsaturated organic sulphonic acids,
e) 0.1 to 5 weight per cent of salts of carboxyl group-containing N-substituted (meth)acrylamide derivatives.

3. Pressure-sensitive adhesive film according to Claims 1 or 2, characterized in that the alkyl(meth)acrylate with 4 to 12 C-atoms in the alkyl radical is a butyl, pentyl, hexyl, heptyl, octyl, 2-ethylhexyl, isooctyl, 2-methylheptyl, nonyl, decyl or dodecyl(meth)acrylate.

4. Pressure-sensitive adhesive film according to one or more of the Claims 1 to 3, characterized in that the hydroxyl group-containing (meth)acrylate is a 2-hydroxyethyl(meth)acrylate, a 2-hydroxypropyl(meth)acrylate or a 4-hydroxybutyl(meth)acrylate.

5. Pressure-sensitive adhesive film according to one or more of the Claims 1 to 4, characterized in that the monoethenoid carboxylic acid is selected from (meth)acrylic acid, β-acryloylhydroxypropionic acid, vinyl acetic acid, fumaric acid, crotonic acid, aconitic acid, dimethyl acrylic acid or itaconic acid.

6. Pressure-sensitive adhesive film according to one or more of the Claims 1 to 5, characterized in that the salts of the unsaturated organic sulphonic acid are alkali or ammonium salts.

7. Pressure-sensitive adhesive film according to one or more of the Claims 1 to 6, characterized in that the unsaturated organic sulphonic acid is a vinyl sulphonic acid, a 2-methylprop-1-en-3-sulphonic acid, a vinylbenzyl sulphonic acid or a 2-acrylamido-2-methylpropane sulphonic acid.

8. Pressure-sensitive adhesive film according to one or more of the Claims 1 to 7, characterized in that the salts of the carboxyl group-containing N-substituted (meth)acrylamide derivative are alkali or ammonium salts.

9. Pressure-sensitive adhesive film according to one or more of the Claims 1 to 8, characterized in that the carboxyl group-containing N-substituted (meth)acrylamide derivative has the general formula 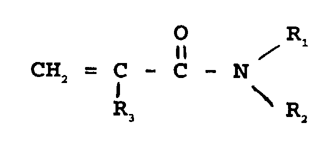 in which R₁ can be a hydrogen atom, an alkyl, aryl, arylalkyl, alkylaryl, alkoxyalkyl, alkoxyaryl, acetylalkyl or acetylalkoxyalkyl group; R₂ a carboxyalkyl or carboxylaryl group; and R₃ a hydrogen atom or a methyl group.

10. Pressure-sensitive adhesive film according to one or more of the Claims 1 to 9, characterized in that the water-soluble amine is a polyoxyalkylene amine, preferably with the general formula 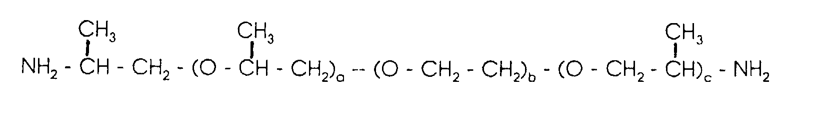 in which a + c is larger than 2 and b is larger than 6 and smaller than 60.

11. Pressure-sensitive adhesive film according to one or more of the Claims 1 to 10, characterized in that the polyoxyalkylene with a molecular mass below 1000 is selected from polyethylene glycol, polypropylene glycol, polyoxypropylene/polyoxyethylene copolymer, monoethylene glycol dimethyl ether or polyethylene glycol dimethyl ether, and that the polyalcohol is a glycerine or a derivative thereof, such as diacetin, glyceric aldehyde, glyceric acid, glyceric acid methylester, α-monoacetin or α-monobutyrin.

12. Pressure-sensitive adhesive film according to one or more of the Claims 1 to 11, characterized in that the cross-linking agent is a metallic chelate, metallic acid ester, an epoxide, an aziridine, a triazidine or a melamine formaldehyde resin.

13. Process for the production of a pressure-sensitive adhesive film according to one or more of the Claims 1 to 12, characterized in that
- 100 parts by weight of a carboxyl group-containing copolymer on an acrylate basis, obtained in a known manner by means of polymerization in solution, and stabilized with isopropyl alcohol,
- 50 to 150 parts by weight of a water-soluble amine,
- 50 to 250 parts by weight of a polyoxyalkylene with a molecular mass of below 1000 and/or a polyalcohol and/or its derivatives,
- 50 to 200 parts by weight of a solution of electrolytes and
- 50 to 200 parts by weight of an electrolyte solution which is a physiologically acceptable, aqueous solution of an alkali metal sulfite, preferably sodium or potassium sulfite, in a concentration of preferably 5 to 40%-wt., and
- 0.1 to 6 parts by weight of a cross-linking agent are mixed and homogenized; that the homogeneous pressure-sensitive adhesive mass thus obtained is applied to a film or sheet whose surface has been treated, if necessary, dried and cut to the required size.

14. Use of the electrically conductive, transparent, pressure-sensitive adhesive films according to one or more of the claims 1 to 13 for the production of biomedical electrodes.

## Revendications

1. Pellicule auto-adhésive, transparente, électro-conductrice présentant une conductibilité électrique de 10⁻⁵S, constituée par
- 100 parties en poids d'un copolymère à base d'acrylate comprenant un ou plusieurs groupes carboxyle,
- 50 à 150 parties en poids d'une amine soluble dans l'eau,
- 50 à 250 parties en poids d'un polyoxyalkylène présentant une masse moléculaire inférieure à 1000
et/ou un polyol
et/ou des dérivés de celui-ci,
- 50 à 200 parties en poids d'une solution électrolytique et
- 0,1 à 6 parties en poids d'un agent de réticulation
caractérisée en ce que la solution électrolytique est une solution aqueuse physiologiquement inoffensive d'un sulfite de métal alcalin, de préférence un sulfite de sodium ou de potassium, en une concentration de préférence comprise entre 5 et 40 % en poids.

2. Pellicule auto-adhésive selon la revendication 1, caractérisée en ce que le copolymère comprenant un ou plusieurs groupes carboxyle est constitué par
a) 40 à 80 % en poids d'un (méth)acrylate d'alkyle comprenant 4 à 12 atomes de carbone dans le résidu alkyle,
b) 10 à 30 % en poids d'un (méth)acrylate comprenant un ou plusieurs groupes hydroxyle,
c) 5 à 30 % en poids d'acides carboxyliques mono-insaturés,
d) 0,5 à 20 % en poids de sels d'acides sulfoniques organiques insaturés,
e) 0,1 à 5 % en poids de sels de dérivés N-substitués de (méth)acrylamide comprenant un ou plusieurs groupes carboxyle.

3. Pellicule auto-adhésive selon la revendication 1 ou 2, caractérisée en ce que le (méth)acrylate d'alkyle comprenant 4 à 12 atomes de carbone dans le résidu alkyle est un (méth)acrylate de butyle, de pentyle, d'hexyle, d'heptyle, d'octyle, de 2-éthylhexyle, d'isooctyle, de 2-méthylheptyle, de nonyle, de décyle ou de dodécyle.

4. Pellicule auto-adhésive selon l'une ou plusieurs des revendications 1 à 3, caractérisée en ce que le (méth)acrylate comprenant un ou plusieurs groupes hydroxyle est un (méth)acrylate de 2-hydroxyéthyle, un (méth)acrylate de 2-hydroxypropyle ou un (méth)acrylate de 4-hydroxybutyle.

5. Pellicule auto-adhésive selon l'une ou plusieurs des revendications 1 à 4, caractérisée en ce que l'acide carboxylique mono-insaturé est choisi parmi l'acide (méth)acrylique, l'acide β-acryloyloxypropionique, l'acide vinylacétique, l'acide fumarique, l'acide crotonique, l'acide aconitique, l'acide diméthylacrylique ou l'acide itaconique.

6. Pellicule auto-adhésive selon l'une ou plusieurs des revendications 1 à 5, caractérisée en ce que les sels de l'acide sulfonique organique insaturé sont des sels alcalins ou d'ammonium.

7. Pellicule auto-adhésive selon l'une ou plusieurs des revendications 1 à 6, caractérisée en ce que l'acide sulfonique organique insaturé est un acide vinylsulfonique, un acide 2-méthylprop-1-ène-3-sulfonique, un acide vinylbenzylsulfonique ou un acide 2-acrylamido-2-méthylpropanesulfonique.

8. Pellicule auto-adhésive selon l'une ou plusieurs des revendications 1 à 7, caractérisée en ce que les sels du dérivé N-substitué de (méth)acrylamide comprenant un ou plusieurs groupes carboxyle sont des sels alcalins ou d'ammonium.

9. Pellicule auto-adhésive selon l'une ou plusieurs des revendications 1 à 8, caractérisée en ce que le dérivé N-substitué de (méth)acrylamide comprenant un ou plusieurs groupes carboxyle présente la formule générale 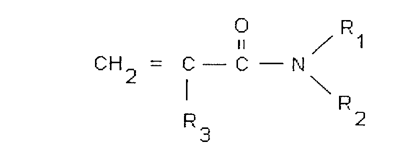 dans laquelle R₁ peut être un atome d'hydrogène, un groupe alkyle, aryle, arylalkyle, alkylaryle, alcoxyalkyle, alcoxyaryle, acétylalkyle ou acétylalcoxyalkyle, R₂ un groupe carboxylalkyle ou carboxylaryle et R₃ un atome d'hydrogène ou un groupe méthyle.

10. Pellicule auto-adhésive selon l'une ou plusieurs des revendications 1 à 9, caractérisée en ce que l'amine soluble dans l'eau est une polyoxylalkylèneamine, de préférence de formule générale 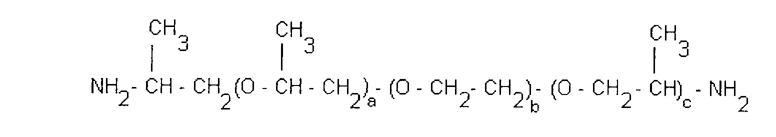 dans laquelle a+c est supérieur à 2 et b est supérieur à 6 et inférieur à 60.

11. Pellicule adhésive selon l'une ou plusieurs des revendications 1 à 10, caractérisée en ce que le polyoxyalkylène présentant une masse moléculaire inférieure à 1000 est choisi parmi le polyéthylèneglycol, le polypropylèneglycol, un copolymère de polyoxypropylène et de polyoxyéthylène, le monoéthylèneglycoldiméthyléther ou le polyéthylèneglycoldiméthyléther et en ce que le polyol est une glycérine ou un dérivé de celle-ci, telle que de la diacétine, du glycérinealdéhyde, de l'acide glycérique, de l'ester méthylique de l'acide glycérique, de l'α-monoacétine ou de l'α-monobutirine.

12. Pellicule auto-adhésive selon l'une ou plusieurs des revendications 1 à 11, caractérisée en ce que l'agent de réticulation est un chélate métallique, un ester d'acide métallique, un époxyde, une aziridine, une triazidine ou un résidu de mélamineformaldéhyde.

13. Procédé pour la fabrication d'une pellicule auto-adhésive selon l'une ou plusieurs des revendications 1 à 12, caractérisé en ce qu'on mélange et homogénéise
- 100 parties en poids d'un copolymère comprenant un ou plusieurs groupes carboxyle à base d'acrylate, qui est obtenu en tant que tel par polymérisation en solution et stabilisé avec de l'alcool isopropylique,
- 50 à 150 parties en poids d'une amine soluble dans l'eau
- 50 à 250 parties en poids d'un polyoxyalkylène présentant une masse moléculaire inférieure à 100
et/ou un polyol
et/ou un dérivé de celui-ci
- 50 à 200 parties en poids d'une solution électrolytique, qui est une solution aqueuse physiologiquement inoffensive d'un sulfite de métal alcalin, de préférence du sulfite de sodium ou de potassium, en une concentration de préférence comprise entre 5 et 40 % en poids,
- 0,1 à 6 parties en poids d'un agent de réticulation,
en ce qu'on applique la masse auto-adhésive homogène ainsi obtenue sur un film, présentant le cas échéant une surface traitée, en ce qu'on sèche et découpe aux dimensions souhaitées.

14. Utilisation des pellicules auto-adhésives transparentes électro-conductrices selon l'une ou plusieurs des revendications 1 à 13 pour la fabrication d'électrodes biomédicales.
